# EUROPEAN PATENT SPECIFICATION

(11) **EP 3 409 172 B1**
(45) Date of publication and mention of the grant of the patent: **12.08.2020**
(21) Application number: 18153499.1
(22) Date of filing: 25.01.2018
(51) Int. Cl.: A47L 9/16, A47L 9/20, A47L 9/28

(54) **SELF-CLEANING VACUUM CLEANER**
SELBSTREINIGENDER STAUBSAUGER
ASPIRATEUR AUTONETTOYANT

(30) Priority: 31.05.2017 CN 201710399302
(43) Date of publication of application: 05.12.2018
(73) Proprietor: Candy Hoover (Suzhou) Co. Ltd., Suzhou City, Jiangsu 215123 (CN)
(72) Inventor: BIAN, Xiaolong, Nantong city JiangSu Province (CN); BASSETT, Alexander Anthony Denny, Suzhou Jiangsu Province 215000 (CN)
(74) Representative: Murgitroyd & Company

(56) References cited:
- EP-A1- 1 834 565
- EP-A1- 2 459 043
- EP-A2- 1 972 248
- DE-A1-102010 026 486
- DE-U1- 29 505 149
- US-A1- 2008 201 898

## Description

This invention relates to a self-cleaning vacuum cleaner.

It is common for vacuum cleaners to include filters which are arranged to remove fine dirt and dust particles from the airflow through the vacuum cleaner. Generally, such filters provide a secondary dust-separation function and are provided downstream of a primary separation device, such as a filter bag or cyclone separator, which is arranged to separate the majority of the dirt and dust particles from the airflow through the vacuum cleaner. Whilst the amount of fine dirt and dust collected by the downstream filter may not be substantial, the filter will eventually become clogged and will require cleaning or replacement if efficient airflow through the vacuum cleaner is to be maintained. Unfortunately, the cleaning and/or replacement of filters is a task that is frequently overlooked by vacuum cleaner owners to the detriment of the cleaning efficiency of their vacuum cleaner.

In order to overcome the above-mentioned problem, US8256061 discloses a tubular filter for an industrial vacuum cleaner having one end seated on a plate, which can be vibrated by a motor to dislodge dirt and dust particles from the surface of the filter, thereby avoiding the need for the user to manually clean the filter. The motor is either operated by a timer, a pressure sensor or by a switch that can be manually actuated by the user.

EP2119388 discloses a filter cleaner for a vacuum cleaner, in which the filter is agitated by the rotation of a fan disclosed in the airflow path.

DE10313402 discloses an air filter for a dental laboratory apparatus, in which a motor mounted inside the filter can be actuated to vibrate the filter in order to dislodge any accumulated particles.

DE102010026486A1 and DE29505149U1 each disclose a vacuum cleaner having a filter for removing dirt and dust from an airflow through the cleaner, wherein a device is provided for vibrating the filter in order to dislodge any accumulated dust particles. All of the above-mentioned devices suffer from drawbacks, to the extent that none have found their way into commercially-produced vacuum cleaners.

In accordance with the present invention, there is provided a vacuum cleaner of the type disclosed in DE102010026486A1 and DE29505149U1, which is characterised in that the device is arranged to successively vibrate the filter at a plurality of different frequencies.

We have found that successively vibrating a filter at different frequencies enables the accumulated dirt and dust be dislodged in an improved manner.

The device may successively sweep between different frequencies in an incremental, decremental or cyclic manner.

The frequencies may be successive or stepped.

The device maybe arranged to vibrate the filter for a predetermined time period.

The vacuum cleaner may have a control unit which detects a change of state of usage of the vacuum cleaner and actuates the device when a change of state of usage is detected.

The change of state of usage may occur when the control unit detects that a power switch of the cleaner is turned on or off. Alternatively, the change of state of usage may occur when the control unit detects that the cleaner has been connected to or disconnected from a power supply: in the latter case, the device may be battery powered to allow the device to operate.

The control unit may also utilise a pressure sensor that can detect when the filter is blocked. The vacuum cleaner may enter a self-cleaning phase when the level of suction downstream of the filter and upstream of the fan inlet exceeds a predetermined level.

In use, the filter is conveniently vibrated and cleaned before or after vacuum cleaning and thus the filter is always clean before cleaning commences.

The control unit may inhibit operation of a suction fan of the vacuum cleaner whilst the filter is being vibrated, thereby avoiding the problem that the airflow will have a tendency to adhere dirt and dust to the surface of the filter.

The control unit may inhibit operation of the device until a predetermined time limit has elapsed since the device was previously actuated, so as to prevent unnecessarily frequent cleaning of the filter.

Ideally, the control unit actuates the device when the power switch is operated to turn the vacuum cleaner off, so that the user does not have to wait for the device to stop vibrating before using the vacuum cleaner. Also, since turning the vacuum cleaner off will stop the suction fan of the vacuum cleaner, cleaning of the filter is performed when there is no airflow through the cleaner. When a vacuum cleaner is turned off, there is always a period before it is unplugged from the power supply and this period is conveniently used to clean the filter.

The control unit may inhibit the device when the switch is turned on, so that the user is always able to override the operation of the device and thus can use the vacuum cleaner on demand.

The filter may be a tubular filter mounted on a projection which extends axially into one end of a hollow core of the filter, the device being mounted inside the projection for imparting vibrations to the filter via the projection, the projection supporting the filter above a container into which dust can fall from the filter when vibrated by the device.

In use, air flows radially inwardly through the filter and along the projection towards an exhaust outlet of the vacuum cleaner. Any dirt or dust accumulated on the external surface of the filter can be removed by actuating the device to vibrate the projection on which the filter is mounted. Dislodged dirt and dust then falls down into the container for collection.

The projection may comprise a frame which supports the interior of the filter.

The projection may be mounted to a body of the vacuum cleaner by a resiliently deformable mount, so that the projection is able to freely vibrate relative to the body when the device is actuated and so that the vibrations are not undesirably transmitted to the body of the cleaner.

The resiliently deformable mount may comprise an annular seal, for example formed of foamed plastics material.

Preferably the filter is supported by the projection at an upper end of elongate tube, the projection extending axially of the tube, the upper end of the tube comprising one or more openings, through which air flows radially towards the filter during operation of the vacuum cleaner, the lower end of the tube being closed and forming the container in which the dirt and dust is collected from the filter.

Preferably the tube comprises an array of openings which act as a coarse filter to prevent larger dirt particles and fibrous matter from being deposited on the filter.

Preferably the projection extends into the tube from the upper end thereof.

Preferably the cleaner comprises a body having a main portion and a removable portion, the projection being provided on the removable portion. In use, a user can remove the removable portion to access the filter for inspection or replacement.

Preferably the removable portion comprises electrical contacts which connect with corresponding contacts on the main portion of the body, the contacts serving to convey electrical power to the device.

Preferably the device is a low voltage device (i.e. less than 24 volts) and is preferably a DC device.

The filter may be any kind of filter and may be another kind of dust separation device such as cyclone separator.

An embodiment of the present invention will now be described by way of an example only and with reference to the accompanying drawings, in which:
Figure 1 is a schematic diagram of an upright vacuum cleaner in accordance with the present invention; and
Figure 2 is a longitudinal sectional view through a separation unit of the vacuum cleaner of Figure 1.

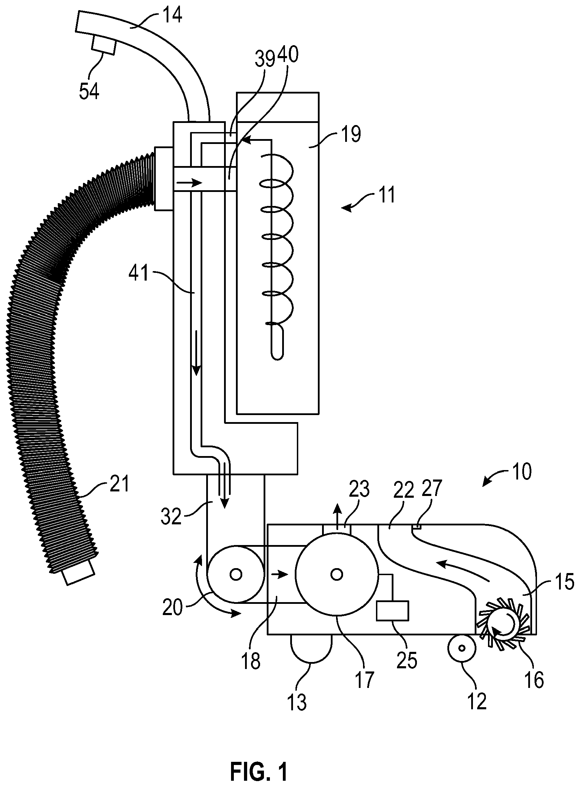

Referring to Figure 1 of the drawings, there is shown an upright vacuum cleaner comprising a floor-engaging head 10 supported by front and rear wheels 12, 13. An upright body portion 11 is pivotally mounted to the rear of the head 10 and comprises a handle 14 for guiding and manoeuvring the cleaner over the floor surface. The head 10 comprises an elongate transverse suction mouth 15 disposed adjacent the front wheels 12. A rotary agitator brush 16 extends across the mouth 15 for beating and sweeping the floor surface during cleaning.

A motor and fan unit 17 disposed in the head 10 drives the agitator brush 16 via a belt (not shown). The motor and fan unit 17 also creates a reduced air pressure in a duct 18, which leads via a neck 20 to the cleaned air outlet duct 39 of a dust separation unit 19, which is detachably mounted to the body 11. In use, the neck 20 acts as the point about which the body 11 can pivot relative to the head 10 between the shown parked position and an in-use cleaning position. An elongate flexible hose is connected to the dirty air inlet 40 of the dust separation unit 19.

In a floor cleaning mode of the cleaner, the distal end of the elongate flexible hose 21 is detachably connected to a port 22 on the head 10 of the cleaner which leads to the suction inlet 15. Dirt and dust is therefore drawn off the floor into the suction mouth 15 aided by the action of the rotary agitator 16. The dirt and dust is then carried up the hose 21 to the separation unit 19. The cleaned air is then drawn downwardly along a duct 41 and via the neck 20 into the motor and fan unit 17, whereupon it is discharged into the atmosphere through an exhaust 23.

In an above-floor cleaning mode the cleaner, the distal end of the elongate flexible hose 21 can be detachably connected to a cleaning tool (not shown). The hose 21 is flexible and extendable to allow the tool on the distal end thereof to be used to clean all kinds of surfaces within reach. In either mode of the cleaner, any dirt and dust entrained in the airflow is removed by the separation unit 19 as will be described hereinafter.

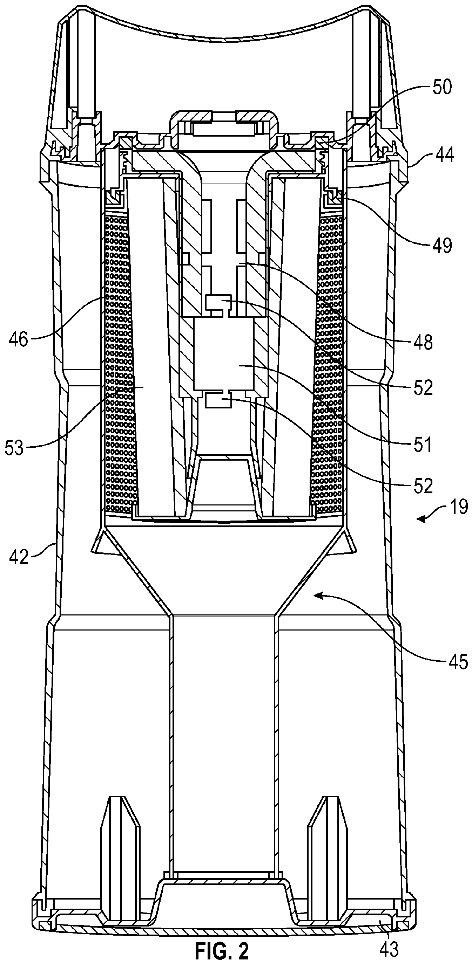

Referring to Figure 2 of the drawings, the separation unit 19 comprises a generally tubular side wall 42, from which the dirty air inlet port 40 extends. The separation unit 19 also comprises a circular bottom end wall, which is hinged to the side wall 42 to form a flap 43 that can be pivoted downwardly, so as to allow separated dirt and dust to be emptied from the interior of the unit. The upper end of the unit is closed by a removable cap 44. A tubular member 45 is mounted co-axially inside the tubular side wall 42 of the unit 19. The upper end of the tubular member 45 is of a wider diameter than the lower end and comprises a plurality of apertures 46 arranged in an array.

The cap 44 comprises an elongate projection 48 which extends axially downwardly into the tubular member 45. The projection 48 is supported at its upper end by a pair of annular elastomeric seals 49, 50 of a resiliently deformable material. The projection 48 comprises a hollow tubular frame in which a low-voltage DC motor 51 is mounted. The motor 51 comprises a pair of weights 52 eccentrically mounted on its output shafts in such a way that vibrations occur when the motor 51 is energised. An elongate tubular filter 53 is mounted on the projection 48. The projection 48 extends downwardly into the central hollow core of the filter 53. The lower end of the hollow core is closed by a bottom end wall of the filter. The lower end of the tubular member 45 is closed by the flap 43.

The handle 14 of the cleaner comprises a switch 54, which can be actuated to energise the motor 17 of the motor and fan unit. When energised, the motor and fan unit cause the air pressure in the duct 41 to drop: this draws dirt and dust laden air into the cleaner along the elongate flexible hose 21, whereupon it tangentially enters the upper end of the separation unit 19 through the inlet port 40. As the air swirls inside the unit, larger (denser), particles in the rotating airflow have too much inertia to follow the tight curve of the airflow and strike the tubular side wall 42 of the unit: these particles then move in a boundary layer to the bottom of the unit 19 where they are deposited. As the air flows spirally downwards inside the unit 19, the air in the spiral flow is constantly drawn radially inwardly through the apertured upper end of the tubular member 45. The apertures 46 act as a coarse filter to prevent any coarse or fibrous dirt and dust particles passing into the interior of the tubular member 45.

Air entering the interior of the tubular member 45 flows radially through the filter 53 and upwardly along the projection 48 to the cleaned air outlet 39.

Any finer dirt and dust particles passing through the apertured upper end of the tubular duct 45 will collect on the exterior surface of the tubular filter 53. In order to prevent the accumulated particles from clogging the filter 53 and restricting the airflow (thereby reducing the separation efficiency of the cleaner), a control unit 25 (shown in Figure 1) is arranged to actuate the motor 51. The actuated motor 51 imparts vibrations to the projection 48 on which the filter 53 is mounted. The projection 48 is resiliently mounted by the seals 49, 50 and thus is able to vibrate relatively freely relative to the rest of the unit 19. The vibrations cause any dirt and dust accumulated on the outside of the filter 53 to fall downwardly into the lower end of the tubular member 45.

The separation unit 19 can be removed from the cleaner and taken to a waste receptacle for emptying. In order to empty the unit 19, the flap 43 is released and this allows the collected dirt and dust to fall out from the two collection regions, which are respectively disposed outside and inside of the tubular member 45.

The control unit 25 is connected to the motor 51 via a low-voltage DC conductor (not shown) which extends through the body of the cleaner. Contacts (not shown) are provided to allow the unit 19 to be removed and to allow the cap 44 to be removed. The control unit 25 is arranged to actuate the motor 51 when the vacuum cleaner is energised by the switch 54. The control unit 25 prevents operation of the motor of the motor fan unit 17 until the DC motor 51 has finished its cleaning cycle. The control unit 25 varies the speed of rotation of the motor 51 by varying the applied DC voltage, in order to cause the motor 51 to vibrate at a range of different frequencies for a predetermined amount of time. It is envisaged that the motor 51 will operate for approximately 150 seconds.

During the design of the cleaner, the resonant frequency of the assembly formed by the filter 53 and its supporting projection 48 may be determined, although it will be appreciated that the resonant frequency will decrease as the weight of the filter 53 increases with the accumulated dust. The control unit 25 may thus be arranged to operate the motor 51 to cause vibrations at a range of frequencies around the determined resonant frequency. The control unit may cause the motor to vibrate in a cyclic manner over a range of frequencies, either in a step-wise or continuous manner.

A vacuum cleaner in accordance with the present invention is therefore able to operate with a high separation efficiency at all times.

## Claims

1. A vacuum cleaner having a filter (53) for removing dirt and dust from an airflow through the cleaner, wherein a device (51, 52) is provided for vibrating the filter (53), **characterised in that** the device (51, 52) is arranged to successively vibrate the filter (53) at a plurality of different frequencies.

2. A vacuum cleaner as claimed in claim 1, in which a control unit (25) causes the device (51, 52) to successively sweep between different frequencies in an incremental, decremental or cyclic manner, wherein the frequencies may be successive or stepped.

3. A vacuum as claimed in claim 1, having a control unit (25) which detects a change of state of usage of the vacuum cleaner and actuates the device (51, 52) when a change of state of usage is detected.

4. A vacuum cleaner as claimed in claim 3, in which the control unit (25) actuates the device (51, 52) when the control unit (25) detects a change in state of a power switch of the cleaner and/or that the cleaner has been connected to or disconnected from a power supply and/or that the airflow rate through a filter (53) of the cleaner has fallen below a predetermined limit.

5. A vacuum cleaner as claimed in claim 3 or claim 4, in which the control unit (25) inhibits operation of a suction fan of the vacuum cleaner whilst the device (51, 52) is actuated.

6. A vacuum cleaner as claimed in any of claims 3 to 5, in which the control unit (25) inhibits operation of the device (51, 52) until a predetermined time limit period has elapsed since the device (51, 52) was previously actuated.

7. A vacuum cleaner as claimed in claim 1, in which the filter (53) is a tubular filter (53) mounted on a projection (48) which extends axially into one end of a hollow core of the filter (53), the vibrating device (51, 52) being mounted inside the projection (48) for imparting vibrations to the filter (53) via the projection (48), the projection (48) supporting the filter (53) above a container (45) into which dust can fall from the filter (53) when vibrated by the device (51, 52).

8. A vacuum cleaner as claimed in claim 7, in which the projection (48) is mounted to a body (19) of the vacuum cleaner by a resiliently deformable mount (49, 50).

9. A vacuum cleaner as claimed in claim 7 or claim 8, in which the filter (53) is supported by the projection (48) at an upper end of an elongate tube (45), the projection (48) extending axially of the tube, the upper end of the tube comprising one or more openings (46), through which air flows radially towards the filter (53) during operation of the vacuum cleaner, the lower end of the tube being closed and forming the container in which the dirt and dust is collected from the filter (53).

## Patentansprüche

1. Ein Staubsauger, der einen Filter (53) zum Entfernen von Schmutz und Staub aus einem Luftstrom durch den Staubsauger aufweist, wobei eine Vorrichtung (51, 52) bereitgestellt ist, um den Filter (53) zum Vibrieren zu bringen, **dadurch gekennzeichnet, dass** die Vorrichtung (51, 52) eingerichtet ist, den Filter (53) zum sukzessiven Vibrieren auf einer Vielzahl unterschiedlicher Frequenzen zu bringen.

2. Staubsauger gemäß Anspruch 1, wobei eine Steuereinheit (25) bewirkt, dass die Vorrichtung (51, 52) auf eine inkrementale, dekrementale oder zyklische Weise sukzessive unterschiedliche Frequenzen durchläuft, wobei die Frequenzen sukzessiv oder gestuft sein können.

3. Staubsauger gemäß Anspruch 1, der eine Steuereinheit (25) aufweist, die eine Änderung des Verwendungszustands des Staubsaugers detektiert und die Vorrichtung (51, 52) aktiviert, wenn eine Änderung des Verwendungszustands detektiert wird.

4. Staubsauger gemäß Anspruch 3, wobei die Steuereinheit (25) die Vorrichtung (51, 52) aktiviert, wenn die Steuereinheit (25) eine Zustandsänderung eines Stromversorgungsschalters des Staubsaugers detektiert und/oder detektiert, dass der Staubsauger mit einer Stromversorgung verbunden oder von ihr getrennt wurde und/oder dass die Luftstromrate durch einen Filter (53) des Staubsaugers unter eine vorgegebene Grenze gefallen ist.

5. Staubsauger gemäß Anspruch 3 oder Anspruch 4, wobei die Steuereinheit (25) den Betrieb eines Sauggebläses des Staubsaugers verhindert, während die Vorrichtung (51, 52) aktiviert ist.

6. Staubsauger gemäß einem der Ansprüche 3 bis 5, wobei die Steuereinheit (25) den Betrieb der Vorrichtung (51, 52) verhindert, bis ein vorgegebener Zeitraum verstrichen ist, seit die Vorrichtung (51, 52) zuvor aktiviert wurde.

7. Staubsauger gemäß Anspruch 1, wobei der Filter (53) ein Röhrenfilter (53) ist, der an einem Vorsprung (48) befestigt ist, welcher sich axial in ein Ende eines hohlen Kerns des Filters (53) erstreckt, wobei die Vibriervorrichtung (51, 52) im Inneren des Vorsprungs (48) befestigt ist, um über den Vorsprung (48) Vibrationen auf den Filter (53) zu übertragen, wobei der Vorsprung (48) den Filter (53) über einem Behälter (45) stützt, in den Staub von dem Filter (53) fallen kann, wenn dieser durch die Vorrichtung (51, 52) zum Vibrieren gebracht wird.

8. Staubsauger gemäß Anspruch 7, wobei der Vorsprung (48) durch eine elastisch verformbare Befestigung (49, 50) an einem Körper (19) des Staubsaugers befestigt ist.

9. Staubsauger gemäß Anspruch 7 oder Anspruch 8, wobei der Filter (53) durch den Vorsprung (48) an einem oberen Ende eines länglichen Rohrs (45) gestützt wird, wobei sich der Vorsprung (48) bezüglich des Rohrs axial erstreckt, wobei das obere Ende des Rohrs eine oder mehrere Öffnungen (46) beinhaltet, durch die Luft während des Betriebs des Staubsaugers radial zum Filter (53) strömt, wobei das untere Ende des Rohrs geschlossen ist und den Behälter bildet, in dem der Schmutz und Staub von dem Filter (53) gesammelt werden.

## Revendications

1. Un aspirateur présentant un filtre (53) pour retirer des saletés et poussières d'un écoulement d'air traversant l'aspirateur, où un dispositif (51, 52) est fourni pour faire vibrer le filtre (53), **caractérisé en ce que** le dispositif (51, 52) est agencé afin de faire vibrer successivement le filtre (53) à une pluralité de différentes fréquences.

2. Un aspirateur tel que revendiqué dans la revendication 1, dans lequel une unité de commande (25) amène le dispositif (51, 52) à effectuer successivement un balayage entre différentes fréquences d'une manière incrémentielle, décrémentielle ou cyclique, où les fréquences peuvent être consécutives ou discontinues.

3. Un aspirateur tel que revendiqué dans la revendication 1, présentant une unité de commande (25) qui détecte un changement d'état d'usage de l'aspirateur et actionne le dispositif (51, 52) lorsqu'un changement d'état d'usage est détecté.

4. Un aspirateur tel que revendiqué dans la revendication 3, dans lequel l'unité de commande (25) actionne le dispositif (51, 52) lorsque l'unité de commande (25) détecte un changement d'état d'un interrupteur d'alimentation de l'aspirateur et/ou que l'aspirateur a été connecté à ou déconnecté d'un bloc d'alimentation et/ou que le débit d'écoulement d'air à travers un filtre (53) de l'aspirateur est tombé en dessous d'une limite prédéterminée.

5. Un aspirateur tel que revendiqué dans la revendication 3 ou la revendication 4, dans lequel l'unité de commande (25) inhibe l'opération d'un ventilateur aspirant de l'aspirateur tandis que le dispositif (51, 52) est actionné.

6. Un aspirateur tel que revendiqué dans n'importe lesquelles des revendications 3 à 5, dans lequel l'unité de commande (25) inhibe l'opération du dispositif (51, 52) tant qu'il ne s'est pas écoulé un laps de temps prédéterminé depuis l'actionnement précédent du dispositif (51, 52).

7. Un aspirateur tel que revendiqué dans la revendication 1, dans lequel le filtre (53) est un filtre tubulaire (53) monté sur une saillie (48) qui s'étend axialement jusque dans une extrémité d'un cœur creux du filtre (53), le dispositif vibrant (51, 52) étant monté à l'intérieur de la saillie (48) pour conférer des vibrations au filtre (53) via la saillie (48), la saillie (48) supportant le filtre (53) au-dessus d'un contenant (45) dans lequel des poussières peuvent tomber du filtre (53) lorsque celui-ci est soumis à des vibrations par le dispositif (51, 52).

8. Un aspirateur tel que revendiqué dans la revendication 7, dans lequel la saillie (48) est montée sur un corps (19) de l'aspirateur grâce à une monture déformable de manière résiliente (49, 50).

9. Un aspirateur tel que revendiqué dans la revendication 7 ou la revendication 8, dans lequel le filtre (53) est supporté par la saillie (48) au niveau d'une extrémité supérieure d'un tube allongé (45), la saillie (48) s'étendant axialement par rapport au tube, l'extrémité supérieure du tube comprenant un ou plusieurs orifices (46), au travers desquels de l'air s'écoule radialement en direction du filtre (53) au cours de l'opération de l'aspirateur, l'extrémité inférieure du tube étant fermée et formant le contenant dans lequel les saletés et poussières sont collectées du filtre (53).
